# EUROPEAN PATENT SPECIFICATION

(11) **EP 1 166 235 B1**
(45) Date of publication and mention of the grant of the patent: **09.10.2002**
(21) Application number: 00907695.1
(22) Date of filing: 01.03.2000
(51) Int. Cl.: G07F 7/08, H04M 15/00, H04Q 7/22

(54) **METHOD FOR IMPLEMENTING TRADING SERVICE**
VERFAHREN ZUM EINFÜHREN VON HANDELSDIENSTLEISTUNGEN
PROCEDE D'APPLICATION D'UN SERVICE COMMERCIAL

(30) Priority: 02.03.1999 FI 990452
(43) Date of publication of application: 02.01.2002
(73) Proprietor: Elisa Communications OYJ, 00130 Helsinki (FI)
(72) Inventor: ALHO, Jukka, FIN-02730 Espoo (FI); ISOTALO, Lauri, FIN-00930 Helsinki (FI)
(74) Representative: Lipsanen, Jari Seppo Einari
(86) International application number: FI0000161
(87) International publication number: WO00052650

(56) References cited:
- WO-A1-90/11661
- WO-A1-97/29584
- WO-A1-97/30543
- WO-A1-98/28900
- WO-A2-98/59455
- US-A- 5 148 474

## Description

The present invention relates to a method, according to the preamble of Claim 1, for implementing a trading service. The invention also relates to a method, according to the preamble to Claim 6, for implementing a trading transaction in a trading service operating through a telephone network.

Methods of this kind are used to implement trading services operating through a telephone. In such services, one or several selling parties offer various products and/or services for purchase through a telephone connection. When trading through the service, the customer contacts the vendor through a telephone network and uses this connection to define the product and/or service that she or he wishes, which is delivered to the customer generally outside the telephone connection and after the connection has terminated. Billing for the trading transaction preferably takes place at least partly in conjunction with the billing for the telephone connection used to place the order, or otherwise automatically through a system linked to the aforesaid telephone connection.

Solutions, according to the state of the art, for selling and paying for a product and/or service by means of a telephone network have been based on the buyer of the product and/or service calling either a normal subscriber number or a special service number, to contact the seller of the product and/or service. In such cases, the caller has placed her or his order on the basis of, for example, previously received product information, or the telephone conversation concerning the order. Previously received product information may have been based on, for example, a product catalogue or other brochure sent to the customer beforehand. In such solutions, payment for the product and/or service may have taken place, for example, by COD, bank transfer, credit card, or when the product is delivered. If the order has been placed·through·a dial-it service, part of the cost of the product or service may have already been charged for in conjunction with the billing of the call. One service of this kind has been the Finnish Ticket Service ticket ordering service, in which tickets to public performances have been available for purchase through a dial-it service. In this case, the share of the service has been billed by a telephone bill through a telephone connection carrying a surcharge, while the remainder of the price, in the case of Ticket Service, that of the tickets themselves, has been paid for later when collecting the product or service.

Solutions are also known, in which the order for the product and/or service is placed through a dial-it service and the entire price of the transaction is billed in conjunction with the billing for the telephone connection. Thus, in such solutions, the buyer pays for the order already when placing the order through the dial-it service, and need not use a means of payment when collecting the product and/or service purchased. In such services, the price of the product and/or service is billed to the caller to the service number, for example, as a time charge based on the duration of the call or as a single-fee charge, in which case a certain fixed surcharge is set for the call. It has been possible to sell products and/or services with different prices using this technique by reserving a separate service number for each product and/or service, with a predetermined time or single-fee-based charge. It has also been possible to change the charge in the service number, so that the price of the product and/or service has been billed by changing the charge for the service number in connection with the purchase event, according to the price or the product and/or service selected.

The solutions according to the state of the art are in many respects inflexible in terms of the actual sales and payment events. Once a product and/or service has been ordered through a convention subscriber number, the product and/or service must be paid for in some traditional way. In such cases, the customer must, for example, give her or his credit card number when placing the order, or pay for the purchase in cash when the product is delivered. Thus, billing by such traditional means requires both parties to a transaction to make active measures relating to payments traffic, which are time- and cost-consuming. In terms of costs, it would be preferable to be able to implement the entire billing in conjunction with the telephone bill.

On the other hand, when utilizing dial-it service numbers for ordering and billing, other problems in solutions according to the state of the art are encountered. For example, the use of dial-it service numbers makes it extremely difficult to bill the caller for the price of more than a single product and/or service in the course of a single call. In time charging, the billing of larger orders would require impracticably long connection times and/or changes in charges that are difficult to implement. Naturally, single-fee charging is also unsuitable for the aforementioned purpose. Thus, in practice, the ordering of several products and/or services always requires several calls, which limits the practicality of such solutions.

Another problem when using a service number having a time- or single-fee-based surcharge is that billing cannot be implemented on the basis of transactions. The surcharge is imposed purely on the basis of the telephone connection, even in such cases in which the product and/or service ordered cannot be supplied. If, for example, the tickets allocated to Ticket Service for a certain public performance have run out, a customer calling the service number will nevertheless have to pay a surcharge according to the service used. Similarly, the user of an automatic car-wash available through a mobile phone will have to pay the fixed fee for an order call when ordering a wash, even if the automatic car-wash is not operating.

WO 98 28900 A discloses a method for transmitting orders over a telecommunication network (orders for products, information requests or payment transactions) between a plurality of subscribers of the telecommunication network and at least one supplier. A connection is established between a subscriber and an operation unit, a short message input by the subscriber is transmitted over the telecommunication network. The short message contains at least information on the product, information on the supplier and a sum. The subscriber is automatically recognized by the operation unit. Afterwards, the sum is checked and the subscriber address is read out of a data bank in which the addresses of the subscribers of the telecommunication network are stored. The information contained in the short message input by the subscriber is linked to the subscriber address and the linked data are transmitted to the supplier and when a product is ordered or payment made, the account of the subscriber at the network operator, in a bank or at a credit card institute is charged and the account of the supplier is credited.

The invention is intended to eliminate the defects disclosed above of the state of the art and for this purpose create an entirely new type of method for implementing a trading service.

The invention is based on the billing for at least one product and/or service ordered being implemented through the telephone bill and in such a way that billing for the telephone connection is delayed, until confirmation is received from at least the selling party that the transaction can be completed. Thus, after receiving an order, the selling party checks the order, and, if at least one product and/or service ordered can be or has been delivered, sends the producer of the trading service confirmation of the transaction. In connection with this, in certain embodiments of the invention, a short message containing a confirmation of the transaction can also be sent to the telephone connection, through which the order has been placed. This confirmation allows the customer to be sure that the order has been received and that the product and/or service will be delivered. The essential aspect is that the trading service is set to bill the amount of the transaction from the telephone connection used in ordering, only once a certain billing condition has been fulfilled. This billing condition may be, for example, a notification from the telephone network to the effect that the message confirming the transaction has been successfully delivered to the connection used to place the order. The minimum billing condition is a statement by the selling party to the effect that the order can be completed. In certain preferred embodiments of the invention, the confirmation message to be sent to the customer can also be utilized to confirm the transaction. In such cases, the confirmation message includes information on the transaction and, if necessary, verification by means of which the payment for at least one product and/or service ordered can be proven.

More specifically, the method, according to the invention, for implementing a trading service is characterized by what is stated in the characterizing section of Claim 1. In. turn, the method, according to the invention, for implementing a transaction in a trading service operating through a telephone network is characterized by what is stated in the characterizing section of claim 6.

Considerable advantages are gained with the aid of the invention.

The invention permits considerably more flexible pricing and billing than in present dial-in service numbers. The buyer is billed for the product and/or service ordered only once the success of the transaction has been confirmed in an agreed manner. This has the clear advantage that the customer need not pay for an attempted purchase, if the order cannot be delivered. When using the known art, a customer may have to pay unnecessarily, for example, if the product ordered has run out, or if the product and/or service is not available, for example, due to an operating fault in an automatic device providing the product and/or service. The invention permits a substantial reduction in unnecessary billing and the natural annoyance of customers in situations like those referred to above. Thanks to the flexible operating principle of the invention, it is also possible to implement the sale and billing for several products and/or services on the basis of one and the same contact.

The preferred embodiment of the invention, in which a purchase transaction can be regarded as having succeeded, if reception of the short message sent in confirmation is confirmed, has the additional advantage that the short message confirms to the customer that the transaction has succeeded. In this embodiment, the customer can also notice in time a situation, in which the order cannot be completed. This is because the failure of the order can be seen in the lack of a confirmation message, or, in a greatly preferred embodiment, from a message sent by the selling party, confirming the failure of the transaction. Another significant additional advantage is created in embodiments using confirmation messages, if an individual, secret code is included in the short message sent as confirmation. In this case, the confirmation message can be used to prove the purchase and payment events, for example, when the buyer goes to collect a product and/or service ordered from the selling party. If desired, the invention can also be used to identify the buyer, which can bring, for example in connection with a GSM telephone system, the additional advantage of the extremely reliable identification of the payer, based on the A-subscriber identity derived from a SIM card.

Further, embodiments, in which verification is sent to the buyer with the short message confirming the transaction, achieve the additional advantage, from the point of view of the selling party using the trading system, that that verification can be easily used to check payments for single sales transactions, for example, through a data network linked to the trading service. The invention also allows the implementation of a data network service, by which the selling party can update its product and/or service range visible to customers and its prices, and check the sales situation at any moment.

In embodiments, in which products and/or services can be ordered using short messages, especially the short messages of a GSM telephone network, there is the additional advantage over communications through a voice connection that congestion of the voice channels of the mobile telephone network will not prevent orders being placed. The same also applies to the messages sent to confirm purchase transactions, which are advantageously just such messages as take up little of the network's resources. If desired, confirmation can certainly also be implemented by creating a real-time voice and/or video connection between the selling party or provider of the trading service and the buyer. Thus, a trading service operating through short messages can be used to achieve a very high order-processing capacity. A large order-processing capacity and congestion tolerance are required especially when selling products and/or services in conjunction with large public events, when the mobile telephone network cells in the vicinity of the event are often fully loaded.

In the following, the invention is examined with the aid of examples and with reference to the accompanying drawings.

Figure 1 shows the operation of one trading service implemented with the aid of one method according to the invention.

Figure 2 shows the exchange of information between a selling party and the producer of a trading service, in connection with a trading service implemented by means of one method according to the invention.

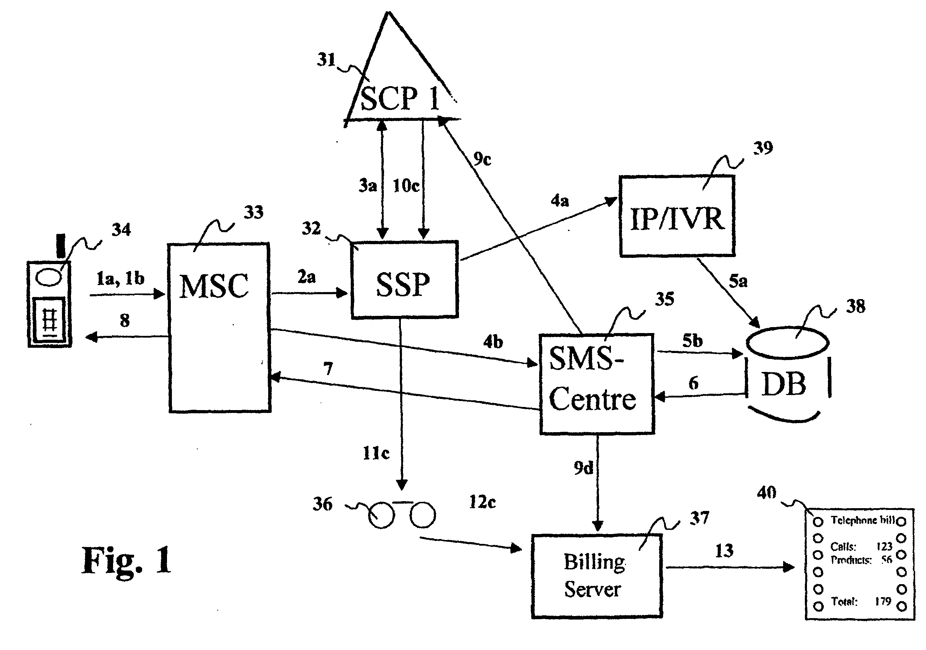

In the embodiment shown in Figure 1, a GSM telephone network is used as the contact network. The system participating in the operations depicted in Figure 1 includes an SCP 31 (Service Control Point) of an intelligent telephone network and an SSP 32 (Service Switching Point) linked to this. The system also includes an MSC 33 (Mobile Service Switching Centre), which is linked to SSP 32, and the customer's network terminal 34, which is linked to the telephone network through MSC 33. According to Figure 1, the system also includes an SMS 35 (Short Message Service Centre) connected to SCP 31 and MSC 33. In addition, the system includes a call-record collection system 36, with which SSP 32 can communicate, and a billing server 37, which is connected to call-record collection system 36 and SMS 35. For the control of the trading system, the system includes a control server 38, with programmable service logic, and which can use the databases required in the service. At least in embodiments utilizing short messages, control server 38 is connected to SMS 35 through a data communications link. In embodiments using a voice connection, the system also includes an IP/IVR device 39 (Intelligent Peripheral / Interactive Voice Response) communicating with SSP 32 and control server 38. The figure also shows a billing ticket 40.

In Figure 1, arrows are also used to show the operations involved in a transaction between a mobile telephone subscriber and a selling party, using a trading service implemented by means of one method according to the invention. According to Figure 1, when a service and/or a product is ordered and the order is confirmed, the following operations are carried out:
1) The mobile telephone subscriber contacts the trading service through her or his terminal device 34. Contact is made, either by 1a) calling the service number or alternatively 1b) by sending a short message with a suitable content to the service's address.
2a) If the contact has been made by calling a service number, the call is routed to the nearest SSP 32, when SSP 32 triggers, i.e. detects an intelligent network call directed to the service number.
3a) SSP 32 makes a query to SCP 31 concerning the forward routing of the call. SCP 31 requests the SSP to connect the call to a suitable IP/IVR 39. At the same time, the desired charge is set for the call.
4a) SSP 32 connects the call to IP/IVR 39, which gives the caller a voice menu. The caller acts according to the instructions of the voice menu and orders the product and/or service that she or he wants.
5a) IP/IVR 39 transmits the product and/or service ordering request that it has received in turn to control server 38.
4b) If, on the other hand, the contact of section 1 has been made using a short message, the short message is transmitted to SMS 35 through MSC 33. The short message can be ticketed in either MSC 33 or SMS 35, to price the short message as desired.
5b) SMS 35 retrieves the fields individualizing the order for the product and/or service from the content of the short message and transmits the order request for the product and/or service in turn to control server 38.
6) From this point on, the processing of the transaction proceeds identically in control server 38, irrespective of whether the order has been placed using a service number or a short message. Control server 38 checks whether the order can be approved and whether the order product and/or service can be supplied. After checking, in positive cases control server 38 sends a confirmation of a successful transaction, and in negative cases confirmation of a failed transaction to SMS 35, for transmission to the network terminal device 34 that has placed the order. If the transaction is confirmed as successful, additional information on the purchase is transferred in the confirmation message along with the confirmation and, if necessary, certification by means of which the selling party can later ensure that the transaction has taken place correctly. The additional information can include, for example, individualization information on the products and/or services ordered, the number of items ordered, and, if desired, a short product description. When selling tickets to public events, the confirmation message can also transmit the seat numbers of the tickets purchased. The verification can be, for example, an individual and secret number code of four characters.
7) SMS 35 forwards the confirmation message to MSC 33 as a short message.
8) MSC 33 forwards the short message to the network terminal device 34 of the mobile telephone network subscriber.

For example, the voice product menu, corresponding to the service number, presented to the buyer by IP/IVR 39, can provide the buyer with information, for instance on the various alternatives and prices of the services and/or products, and, if necessary, a short product description. Price information on services and products can be recorded in IP/IVR 39, but it can also be retrieved in individual cases from the product and/or service databases of control server 38, in which case the price information will always be up to date and will definitely correspond to the prices actually billed. Control server 38 should always have available real-time information on the state, availability, and prices of the services and products on sale. In addition to this, the voice product menu can also include information on the services or products being sold and on their manufacturers and suppliers.

Figure 1 also shows the operations that relate to billing for a transaction between a mobile telephone subscriber and a selling party, when using a trading service implemented using one method according to the invention. According to Figure 1, when a service and/or product is billed, the following operations take place:
9c) SMS 35 waits for confirmation of the reception of the confirmation message it has transmitted, and, on reception of confirmation, SMS 35 informs SCP 31 of the successful transaction.
10c) If billing is ticket-based, SCP 31 instructs SSP 32 to write a ticket. In some intelligent telephone networks, the instruction to write a ticket can also be made, for example, by SCP 31 instructing SSP 32 to form a call event and simultaneously sending a so-called FCI (Furnish Charging Information) message. A call event of this kind is intended to permit a billing ticket to be formed and may also be an entirely internal event in SSP 32, a virtual call event, or, for instance, a call event that is intended to fail.
11c) SSP 32 makes a ticket, according to the ticket-writing instruction it has received from SCP 31, which allows the mobile phone connection used in the order to be billed. SSP 32 sends this ticket to call-record collection system 36.
12c) In call-record collection system 36, the billing tickets are further processed as required, after which they are sent to billing server 37.
9d) Alternatively, the system can be set to operate in operations 9c - 12c in such a way that, when SMS 35 receives the confirmation described in section 9c), it sends information of the successful transaction directly to billing server 37.
13) Billing server 37 combines the information of the billing ticket, such as the product and service codes of the products and/or services and the number of items ordered, the product itemization in billing server 37, and the price information in force at the moment of the purchase. On this basis, the buyer receives an itemization in her or his telephone bill of the products ordered and their prices. In addition, the system can be set to operate to permit attachment to the bill of supplementary information, such as the producer's contact information, terms and conditions of delivery, or other information of use to the buyer. If necessary, it is also possible to create several billing tickets, so that the product and service codes and quantities ordered of all the products to be paid for in the transaction can be provided for the telephone bill.

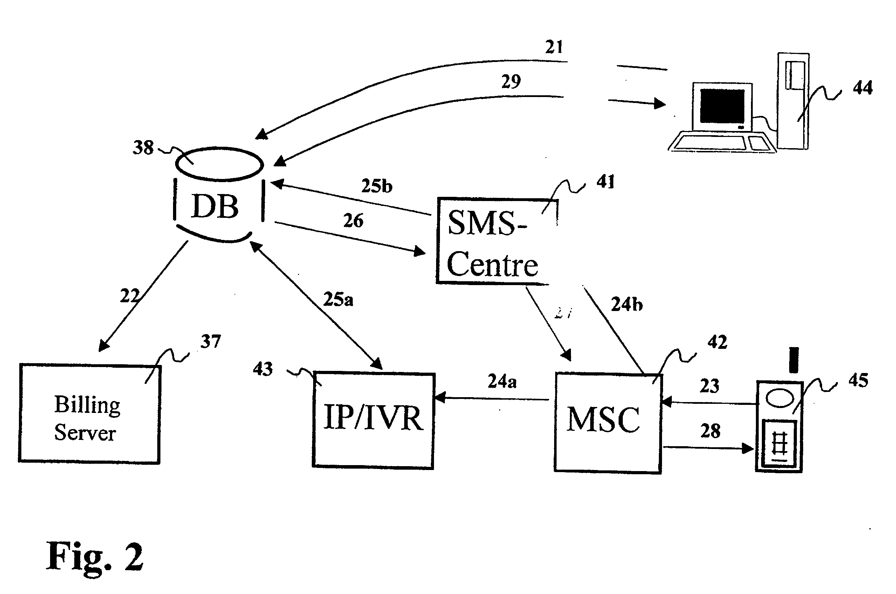

In the embodiment shown in Figure 2, a GSM telephone network is used as the contact network. The system participating in the operations shown in Figure 2 includes a control server 38, wherein the service logic can be programmed and which can use the databases required in the service. The system also includes a billing server 37 connected to control server 38, which controls the billing of the telephone operator. In embodiments utilizing short messages, the system includes an SMS 41 connected to control server 38 by a telecommunications link, and an MSC 42 also communicating with SMS 41. The system can also include an IP/IVR 43, connected to both MSC 42 and control server 38. In addition, the system can include a telecommunications link, through which the selling party can be in contact with the control server 38 controlling the trading service. In the system of Figure 2, this kind of link can be used by means of the selling party's computer 44. Further, the figure shows the network terminal device 44 of the selling party, which is linked to the telephone network through MSC 42. It should be noted from Figure 2 that, when using the system of Figure 2 in connection with the system of Figure 1, the system's SMS 41, MSC 42, and IP/IVR 43 may be the same physical devices as the corresponding SMS 35, MSC 33, and IP/IVR 39 of Figure 1. Control server 38 and billing server 37 are preferably the same devices in both systems.

Figure 2 also depicts the operations relating to the exchange of information between the selling party and the provider of the trading service, when updating and monitoring the data and service routines contained in a trading service implemented using one method according to the invention. According to Figure 2, when updating a service and/or product database and making queries concerning trading, the following operations are carried out:
21) The party selling the service and/or product manages its service and/or product database recorded in server 38, from computer 44 through a telecommunications link. The telecommunications link can be, for example, a link formed through the Internet, by means of a web-based user interface. During a link of this kind, the selling party can flexibly add and change products and update prices in the service it provides.
22) Information on possible product additions and changes and price updates are sent to the tele-operator's billing server 37.

According to Figure 2, when smaller updates, queries, or checks are made to the service and/or product database, the following operations are carried out:
23) In preferred embodiments, the selling party can also, if desired, query the state of its service and/or product database, and individual sales transactions through a digital mobile phone 45. At a public event, for example, attendants can send a query in this way, to check a customer's verification of a ticket sale.
24a) The selling party can make a query using a mobile phone 45, for example, by calling a telephone number reserved for this purpose, from which the call is connected to IP/IVR 43. The selling party can then use the voice menu presented by IP/IVR 43 to make queries and/or checks relating to its service and/or product database. Thus, for example, an attendant at a public event can key in to IP/IVR 43 the verification given by the customer and receive confirmation of the validity of the verification, as a voice message.
25a) IP/IVR 43 transmits the query and/or check request to control server 38, which accesses the desired information from the service and/or product database for transmission back to IP/IVR 43 to be read as a voice message to the selling party.
24b) When the selling party makes the query referred to in section 23 through the short message service of a mobile telephone network, the operations described in sections 24a and 25a can be left out. Instead, the selling party sends a short message with a suitable content to an address reserved for this purpose, the short message being routed to SMS 41. In this embodiment, the content of the query and/or check is determined on the basis of codes entered in the short message.
25b) SMS 41 forwards the query and/or check request to control server 38, which retrieves the desired information from the service and/or product database.
26) Having formed a suitable response to the query sent in section 25a or 25b on the basis of information retrieved from the service and/or product database, control server 38 sends its reply, in the form of a short message, to SMS 41 for forwarding to the mobile telephone 45 of the selling party.
27) SMS 41 transmits the short message to MSC 42.
28) MSC 42 forwards the short message to the mobile telephone 45 of the selling party. In this way, the attendant at a public event referred to above can receive, for example, confirmation of the validity of the verification given by the customer.
29) If the selling party wishes, computer 44 can be used instead of mobile telephone 45 to make a query, in which case a telecommunications link to control server 38 is formed, for example, through the Internet.

In one method according to the invention for implementing a trading service, the following procedural steps are made:
- A trading service control system 38 is created and is connected to a telephone network over a telecommunications link.
- A service logic is arranged in the control server 38, for offering at least one product and/or service for purchase through the trading service. The offering of products and/or services and the functionality of the service logic can be left, at least in part, to be taken care of by the selling party, which is a customer of the trading service.
- A possibility is arranged for at least one customer to make contact, with the aid of a network terminal device 34 through a link over a telephone network, with the service's control system 38, for ordering at least one product and/or service through the trading service. This contact can be made, for example, as a conventional telephone connection from the customer's network terminal device 34, for example, a digital mobile telephone, to an IP/IVR 39 connected to the control system. The contact can also be a short message, for instance, a GSM short message, sent by the customer, containing the order coded with the aid of agreed keys.
- A system controlling the transmission of contacts and billing for them is arranged with the control system 38 to add the price of the order to the telephone bill of the telephone connection used by network terminal device 34.
- The control system 38 is arranged to determine a billing condition for each contact made, to control system 38, to order at least one product and/or service.
- The control system 38 is arranged, in connection with the system controlling and billing the transmission of contacts, to add the price of the order to the telephone bill of the telephone connection used by network terminal device 34, only if the billing condition for the connection is fulfilled.
- Control system 38 is arranged to check, after receiving the order, whether an order can be delivered.
- The billing condition is arranged to be fulfilled, only if the order can be delivered. In some preferred embodiments, the system is set to operate in such a way that, in addition to the deliverability condition being fulfilled, the fulfilment of the billing condition requires the reception of the order confirmation, which is sent in these embodiments, to be confirmed.

Embodiments of the invention, differing from those disclosed above, can also be envisaged within the scope of the invention. Unlike the examples of the figures, the network terminal device using the trading service, for instance, need not necessarily be a mobile telephone, but may be any telephone or computer/telephone combination whatsoever, which incorporates the requisite functions.

In the solutions of the example, the service and/or product databases of the selling party are recorded in control server 38, but this is not essential. These databases can equally well be recorded in an external server or can even be maintained even in the selling party's own information system. In these cases, however, control server 38 must naturally have a telecommunications connection to the server controlling the service and/or product databases, so that the trading service can be implemented in the desired manner.

The examples disclose the application of the invention in a GSM telephone system. However, the invention can also be applied in other telephone systems, for example, in a UMTS telephone system. In that case, the hardware and software units and operations depicted in the examples are replaced with corresponding units and operations in the telephone system being used.

In principle, the message sent as confirmation of an order can also be a message sent over a voice connection. This message can be given already during the telephone connection used to place the order, if the deliverability of the order can be checked quickly. The message can also be sent later by calling the network terminal device.

## Claims

1. A method for implementing a trading service, comprising the steps of
- creating a trading service control system (38) and connecting it to a telephone network using a telecommunications link,
- arranging, in the control system (38), a service logic for offering at least one product and/or service for purchase through the trading service,
- arranging a possibility for at least one customer to make contact with the aid of a network terminal device (34) through the telephone network to the control system (38) to order at least one product and/or service through the trading service,
- arranging the control system (38) to determine a billing condition for each contact made to the control system (38) for ordering at least one product and/or service, and
- arranging the control system (38), together with the system for controlling and billing the transmission of contacts, to add the price of the order to the telephone bill of the telephone connection used by the network terminal device (34), only if the billing condition set for the contact is fulfilled,
**characterized by**
- arranging the control system (38) to check, after receipt of the order, whether the order can be delivered, and
A:
- arranging the billing condition to be fulfilled, if the order can be delivered,
OR
B:
- arranging the control system (38) to form an order confirmation message, if the order can be delivered,
- arranging the control system (38) to forward the order confirmation message formed to the telephone network, for transmission to the network terminal device (34) used to make the order,
- arranging the control system (38) and/or the system controlling and billing the transmission of contacts to wait for confirmation of the successful delivery, at the network terminal device (34), of the order confirmation message sent to the network terminal device (34) used to place the order, and
- arranging the billing condition to be fulfilled, if the order can be delivered and confirmation is received of the delivery of the order confirmation message.

2. A method according to Claim 1, **characterized in that** the control system (38) is arranged to include, in the order confirmation message, information on the order, such as individualization information on the at least one product and/or service, and/or information on the at least one product and/or service ordered.

3. A method according to Claim 2, **characterized in that** the control system (38) is arranged to include in the order confirmation message information on the number of products and/or services ordered, if the order has concerned more than one products and/or services.

4. A method according to one of Claims 1 - 3, **characterized in that** the control system (38) is arranged to include, in the order confirmation message, verification of payment for the transaction.

5. A method according to one of Claims 1 - 4, **characterized in that** the control system (38) is arranged, together with the system controlling and billing the transmission of contacts, to add the price of the order to the telephone bill of the telephone connection used by the network terminal device (34) by means of ticket-based billing, so that, in addition to the price billed, the telephone bill gives additional information on the transaction being billed for.

6. A method for implementing a transaction in a trading service operating through a telephone network, through which at least one product and/or service is offered for ordering by means of a contact made by a customer through the telephone network, the method comprising the steps of
- receiving an order placed by the customer through the telephone network, and
- if necessary, adding, according to the service logic, the price of the order to the telephone bill of the telephone connection used in the contact,
**characterized by**
- checking whether at least one product and/or service according to the received order can be delivered, and
- if at least one product and/or service according to the order can be delivered:
- sending an order confirmation message for this to the telephone connection used to place the order,
- waiting for conformation of reception of the order confirmation message, and
- if confirmation is received, adding the price of the order to the telephone bill of the telephone connection used to place the order.

7. A method according to Claim 6, **characterized in that** the order placed by the customer is received and the order confirmation message is sent by means of at least one mobile telephone network short message.

8. A method according to Claim 6, **characterized in that** the order placed by the customer is received through a voice connection with the aid of an IP/IVR device (39) and the order confirmation message is sent through a voice connection or sent through at least one mobile telephone network short message.

9. A method according to one of Claims 6 - 8, **characterized in that** the order confirmation message includes certification for verifying payment for the transaction.

## Patentansprüche

1. Verfahren zum Implementieren einer Handelsdienstleistung, das die folgenden Schritte aufweist:
- Einrichten eines Steuerungssystems (38) für Handelsdienstleistungen und dieses an ein Telefonnetz anschließen, wobei eine Telekommunikationsverbindung verwendet wird,
- Einrichten einer Dienstleistungslogik in dem Steuerungssystem (38), um mindestens ein Produkt und/oder eine Dienstleistung zum Kauf über die Handelsdienstleistung anzubieten,
- Bereitstellen einer Möglichkeit, daß mindestens ein Kunde mit Hilfe eines Netzwerkendgeräts (34) über das Telefonnetz in Kontakt mit dem Steuerungssystem (38) treten kann, um mindestens ein Produkt und/oder eine Dienstleistung über die Handelsdienstleistung zu bestellen,
- Einrichten des Steuerungssystems (38), um für jeden mit dem Steuerungssystem (38) aufgenommenen Kontakt zum Bestellen mindestens eines Produkts und/oder einer Dienstleistung eine Zahlungsbedingung zu bestimmen,
- Einrichten des Steuersystems (38) zusammen mit dem System zur Steuerung und Verrechnung der Kontaktübermittlung, um nur dann den Preis der Bestellung zu der Telefonrechnung des von dem Netzwerkendgerät (34) benutzten Telefonanschlusses zu addieren, wenn der Satz an Zahlungsbedingungen für den Kontakt erfüllt ist,
**gekennzeichnet durch**
- Einrichten des Steuerungssystems (38) derart, daß es nach Empfang der Bestellung prüft, ob die Bestellung geliefert werden kann, und
A:
- Einrichten, daß die Zahlungsbedingung erfüllt ist, wenn die Bestellung geliefert werden kann,
oder
B:
- Einrichten des Steuerungssystems (38) derart, dass es eine Bestellungsbestätigungsnachricht erzeugt, wenn die Bestellung geliefert werden kann,
- Einrichten des das Steuerungssystems (38), um die erzeugte Bestellungsbestätigungsnachricht an das Telefonnetz weiterzuleiten zur Übertragung an das Netzwerkendgerät (34), das benutzt wurde, um die Bestellung aufzugeben,
- Einrichten des Steuerungssystems (38) und/oder des Systems zur Steuerung und Verrechnung der Kontaktübermittlung, um auf eine Bestätigung an dem Netzwerkendgerät (34) zu warten, daß die Zustellung der an das Netzwerkendgerät (34), das für das Aufgeben der Bestellung verwendet wurde, gesendeten Bestellungsbestätigungsnachricht erfolgreich war,
- Einrichten der zu erfüllenden Zahlungsbedingung, wenn die Bestellung geliefert werden kann und die Bestätigung der Zustellung der Bestellungsbestätigungsnachricht empfangen wird.

2. Verfahren nach Anspruch 1, **dadurch gekennzeichnet, daß** das Steuerungssystem (38) derart eingerichtet ist, daß es in die Bestellungsbestätigungsnachricht Informationen über die Bestellung einfügt, wie etwa individualisierte Informationen über das mindestens eine Produkt und/oder die Dienstleistung und/oder Informationen über das mindestens eine Produkt und/oder die Dienstleistung, die bestellt wurden.

3. Verfahren nach Anspruch 2, **dadurch gekennzeichnet, daß** das Steuerungssystem (38) derart eingerichtet ist, daß es in die Bestellungsbestätigungsnachricht Informationen über die Anzahl von bestellten Produkten und/oder Dienstleistungen einfügt, wenn die Bestellung mehr als ein Produkt und/oder eine Dienstleistung betroffen hat.

4. Verfahren nach einem der Ansprüche 1 bis 3, **dadurch gekennzeichnet, daß** das Steuerungssystem (38) derart eingerichtet ist, daß es in die Bestellungsbestätigungsnachricht eine Prüfung der Bezahlung für die Transaktion einfügt.

5. Verfahren nach einem der Ansprüche 1 bis 4, **dadurch gekennzeichnet, daß** das Steuerungssystem (38) zusammen mit dem System zur Steuerung und Verrechnung der Kontaktübermittlung derart eingerichtet ist, daß es den Preis der Bestellung mit Hilfe einer Verrechnung auf Basis von Belegen zu der Telefonrechnung des von dem Netzwerkendgerät (34) verwendeten Telefonanschlusses addiert, so daß die Telefonrechnung neben dem verrechneten Preis zusätzliche Informationen über die verrechnete Transaktion gibt.

6. Verfahren zum Implementieren einer Transaktion in einer Handelsdienstleistung, die über ein Telefonnetz arbeitet, durch welche mindestens ein Produkt und/oder eine Dienstleistung zur Bestellung angeboten wird, mit Hilfe eines von einem Kunden über das Telefonnetz hergestellten Kontakts, wobei das Verfahren die folgenden Schritte aufweist:
- Empfangen einer von dem Kunden über das Telefonnetz aufgegebenen Bestellung, und
- falls notwendig, das Addieren des Preises der Bestellung entsprechend der Dienstleistungslogik zur Telefonrechnung des für den Kontakt verwendeten Telefonanschlusses,
**gekennzeichnet durch**
- Prüfen, ob mindestens ein der empfangenen Bestellung entsprechendes Produkt und/oder eine Dienstleistung geliefert werden kann, und
- wenn mindestens ein der Bestellung entsprechendes Produkt und/oder eine Dienstleistung geliefert werden kann:
o Senden einer Bestellungsbestätigungsnachricht dafür an den Telefonanschluss, der verwendet wurde, um die Bestellung aufzugeben,
o Warten auf eine Empfangsbestätigung der Bestellungsbestätigungsnachricht, und
o Addieren des Preises der Bestellung zu der Telefonrechnung des Telefonanschlusses, der verwendet wurde, um die Bestellung aufzugeben, wenn die Bestätigung empfangen wird.

7. Verfahren nach Anspruch 6, **dadurch gekennzeichnet, daß** die von dem Kunden aufgegebene Bestellung empfangen und die Bestellungsbestätigungsnachricht mittels mindestens einer Mobiltelefon-SMS gesendet wird.

8. Verfahren nach Anspruch 6, **dadurch gekennzeichnet, daß** die von dem Kunden aufgegebene Bestellung über eine Sprachverbindung mit Hilfe eines IP-/IVR-Geräts (39) empfangen wird und die Bestellungsbestätigungsnachricht über eine Sprachverbindung gesendet wird oder über mindestens eine Mobiltelefon-SMS gesendet wird.

9. Verfahren nach einem der Ansprüche 6 bis 8, **dadurch gekennzeichnet, daß** die Bestellungsbestätigungsnachricht eine Bescheinigung zum Bestätigen der Bezahlung für die Transaktion enthält.

## Revendications

1. Procédé pour la mise en oeuvre d'un service de commerce, comprenant les étapes de :
création d'un système de contrôle de service de commerce (38) et connexion de ce système à un réseau téléphonique au moyen d'une liaison de télécommunication,
agencement, dans le système de contrôle (38), d'une logique de service pour offrir au moins un produit et/ou service à l'achat par l'intermédiaire du service de commerce,
agencement d'une possibilité, pour au moins un client, de prendre contact à l'aide d'un terminal de réseau (34) et par l'intermédiaire du réseau téléphonique avec le système de contrôle (38) afin de passer commande d'au moins un produit et/ou service par l'intermédiaire du service de commerce,
agencement du système de contrôle (38) pour déterminer une condition de facturation pour chaque contact pris avec le système de contrôle (38) afin de passer commande d'au moins un produit et/ou service, et
agencement du système de contrôle (38), en association avec le système de contrôle et de facturation de la transmission de contacts, pour ajouter le prix de la commande à la facture de téléphone de la connexion téléphonique utilisée par le terminal de réseau (34), seulement si la condition de facturation fixée pour le contact est remplie,
**caractérisé par** :
l'agencement du système de contrôle (38) pour vérifier, après réception de la commande, si la commande peut être livrée ou non, et
A: l'agencement pour que la condition de facturation soit remplie, si la commande peut être livrée, ou
B : l'agencement du système de contrôle (38) pour créer un message de confirmation de commande, si la commande peut être livrée,
l'agencement du système de contrôle (38) pour transmettre le message de confirmation de commande formé au réseau téléphonique, afin de le transmettre au terminal de réseau (34) qui a été utilisé pour passer la commande,
l'agencement du système de contrôle (38) et/ou du système de contrôle et de facturation de la transmission de contacts pour attendre la confirmation de la réception réussie, à l'endroit du terminal de réseau (34), du message de confirmation de commande envoyé au terminal de réseau (34) utilisé pour passer la commande, et
l'agencement pour que la condition de facturation soit remplie, si la commande peut être livrée et si la confirmation de la réception du message de confirmation de commande est reçue.

2. Procédé selon la revendication 1, **caractérisé en ce que** le système de contrôle (38) est agencé pour inclure, dans le message de confirmation de commande, des informations sur la commande, telles que des informations d'individualisation sur le dit au moins un produit et/ou service, et/ou des informations sur le dit au moins un produit et/ou un service commandés.

3. Procédé selon la revendication 2, **caractérisé en ce que** le système de contrôle (38) est agencé pour inclure, dans le message de confirmation de commande, des informations sur le nombre de produits et/ou de services commandés, si la commande a concerné plus d'un produit et/ou service.

4. Procédé selon une des revendications 1 à 3, **caractérisé en ce que** le système de contrôle (38) est agencé pour inclure, dans le message de confirmation de commande, une vérification de paiement pour la transaction.

5. Procédé selon une des revendications 1 à 4, **caractérisé en ce que** le système de contrôle (38) est agencé, ainsi que le système de contrôle et de facturation de la transmission de contacts, pour ajouter le prix de la commande à la facture de téléphone de la connexion téléphonique utilisée par le terminal de réseau (34) au moyen d'une facturation à base de ticket, de sorte que, en plus du prix facturé, la facture de téléphone donne des informations additionnelles sur la transaction facturée.

6. Procédé pour la réalisation d'une transaction dans un service de commerce travaillant au moyen d'un réseau téléphonique, par l'intermédiaire duquel au moins un produit et/ou service est offert à la vente au moyen d'un contact établi par un client par l'intermédiaire du réseau téléphonique, le procédé comprenant les étapes de :
réception d'une commande passée par le client par l'intermédiaire du réseau téléphonique ; et
si nécessaire, addition, conformément à la logique de service, du prix de la commande à la facture de téléphone de la connexion téléphonique utilisée dans le contact,
**caractérisé par** :
la vérification de ce qu'au moins un produit et/ou service conformes à la commande reçue peut être fourni, et
si au moins un produit et/ou service conforme à la commande peut être fourni :
envoi d'un message de confirmation de commande pour celui-ci à la connexion téléphonique utilisée pour passer la commande ;
attente de la confirmation de réception du message de confirmation de commande, et
si une confirmation est reçue, addition du prix de la commande à la facture de téléphone de la connexion téléphonique utilisée pour passer la commande.

7. Procédé selon la revendication 6, **caractérisé en ce que** la commande passée par le client est reçue et le message de confirmation de commande est envoyé au moyen d'au moins un court message de réseau téléphonique mobile.

8. Procédé selon la revendication 6, **caractérisé en ce que** la commande passée par le client est reçue par l'intermédiaire d'une liaison vocale à l'aide d'un dispositif IP/IVR(39) et le message de confirmation de commande est envoyé par l'intermédiaire d'une liaison vocale ou envoyé par l'intermédiaire d'au moins un court message de réseau téléphonique mobile.

9. Procédé selon une des revendications 6 à 8, **caractérisé en ce que** le message de confirmation de commande inclut une certification pour vérification du paiement de la transaction.
